# EUROPÄISCHE PATENTSCHRIFT

(11) **EP 0 972 689 B1**
(45) Veröffentlichungstag und Bekanntmachung des Hinweises auf die Patenterteilung: **14.06.2006**
(21) Anmeldenummer: 99113925.4
(22) Anmeldetag: 16.07.1999
(51) Int. Cl.: B60S 9/08

(54) **Hubeinrichtung, insbesondere Sattelstütze**
Lifting device, in particular trailer supports
Dispositif de levage, en particulier supports de remorque

(30) Priorität: 17.07.1998 DE 19832260
(43) Veröffentlichungstag der Anmeldung: 19.01.2000
(73) Patentinhaber: haacon hebetechnik gmbh, D-97896 Freudenberg (DE)
(72) Erfinder: Böxler, Armin, 97896 Freudenberg (DE); Fuchs, Helmut, 97903 Collenberg (DE); Dölger, Werner, 97896 Freudenberg (DE)
(74) Vertreter: Böck, Bernhard

(56) Entgegenhaltungen:
- DE-U- 8 813 558
- US-A- 5 676 018

## Beschreibung

Die vorliegende Erfindung betrifft eine Hubeinrichtung, insbesondere eine Sattelstütze oder dergleichen, mit einem Stützrohr und einem gegenüber dem Stützrohr verfahrbaren Schaftrohr, wobei am Schaftrohr ein Hubgetriebe angeordnet ist, das eine Antriebswelle zum Anschluß einer Antriebseinrichtung und eine Abtriebswelle zum Antrieb einer im Stützrohr angeordneten Hubspindel aufweist, die auf eine im Schaftrohr angeordnete Druckplatte wirkt.

Hubeinrichtungen der eingangs genannten Art werden in der Anwendung als Sattelstütze beispielsweise als höhenverstellbare Abstützeinrichtungen für sog. "Sattelauflieger" verwendet, wenn diese unabhängig von einem Zugfahrzeug abgestellt werden. Bei bekannten Hubeinrichtungen, die im wesentlichen ein Stützrohr mit einem daran angeordneten Standfuß und ein gegenüber dem Stützrohr mittels eines Hubgetriebes teleskopierbares Schaftrohr aufweisen, befindet sich das Getriebegehäuse in einer gegenüber der Längs- oder Hochachse des Stützrohres verschwenkten Stellung, um die Antriebswelle des Hubgetriebes links oder rechts am Stützrohr vorbeiführen zu können. Zwar sind auch Ausführungen von Hubstützen bekannt, bei denen das Hubgetriebe mit seiner Hochachse, die sowohl die Achse der Antriebswelle als auch die Achse der Abtriebswelle des Hubgetriebes schneidet, parallel zur Achse der Hubspindel angeordnet ist. Jedoch ist es gemäß dem Stand der Technik hierzu notwendig, die Antriebswelle des Hubgetriebes mit einem Wellenende in der im Schaftrohr angeordneten Druckplatte aufzunehmen, um auch bei dieser Anordnung des Hubgetriebes die notwendigen Schaltwege der Antriebswelle ausführen zu können.

Hieraus ergibt sich die Notwendigkeit einer zusätzlichen Bearbeitung der Druckplatte, die mit einer entsprechenden Aufnahmebohrung versehen werden muß, wobei diese Aufnahmebohrung aufgrund der Rotation der Antriebswelle gleichzeitig als Wellenlager auszuführen ist. Daher erweist sich die vorstehend beschriebene, zur Hubspindelachse parallele Ausrichtung des Hubgetriebes als konstruktiv aufwendig und entsprechend kostenintensiv in der Herstellung im Vergleich zu einer gegenüber der Achse der Hubspindel verschwenkten Anordnung des Hubgetriebes.

Um auf die vom jeweiligen Einsatz der Hubstützen abhängigen Ein- oder Anbauverhältnisse Rücksicht nehmen zu können, werden die bekannten Hubstützen sowohl mit einem nach links als auch mit einem nach rechts verschwenkt angeordneten Hubgetriebe angeboten. Bei einer gegebenen Anzahl von ihrer Art nach unterschiedlichen Hubstützen ergibt sich demnach insgesamt eine Erhöhung der Variantenzahl aufgrund der Notwendigkeit die ihrer Art nach unterschiedlichen Hubstützen jeweils in der Ausstattung mit einem nach links und nach rechts verschwenkten Hubgetriebe bereitzuhalten.

Aus der DE-U-88 13 558.6 geht eine Sattelstütze hervor, bei der die Antriebswelle des Hubgetriebes stützenseitig in der Druckplatte gelagert ist.

Die US-A-5,676,018 offenbart eine Sattelstütze, bei der die Antriebswelle des Hubgetriebes oberhalb der Druckplatte gelagert ist. Hierbei ist die Antriebswelle seitlich an der Hubspindel vorbeigeführt, so dass insgesamt eine verschwenkte Anordnung des Hubgetriebes entsteht.

Ausgehend von dem vorstehend erläuterten Stand der Technik liegt der Erfindung die Aufgabe zugrunde, eine Hubeinrichtung zur Verfügung zu stellen, die mit einem achsenparallel zur Achse der Hubspindel angeordneten Hubgetriebe versehen ist, ohne daß hiermit ein besonderer konstruktiver Aufwand verbunden ist.

Diese Aufgabe wird durch eine Hubeinrichtung mit den Merkmalen des Anspruchs 1 gelöst.

Bei der erfindungsgemäßen Hubeinrichtung ist die Antriebswelle des Hubgetriebes mit ihrem Abtriebsende in einem in einer Rohrwand des Schaftrohrs unterhalb der Druckplatte angeordneten Wellenlager gelagert.

Die erfindungsgemäß gestaltete Hubeinrichtung ermöglicht somit eine Anordnung bzw. Ausbildung einer Wellenlagerung zur Aufnahme des Abtriebsendes der Antriebswelle des Hubgetriebes unabhängig von der Gestaltung der Druckplatte. Somit kann die Druckplatte entsprechend ihrer eigentlichen Funktion, nämlich die Druckkraft der Hubspindel auf das Schaftrohr zu übertragen, und hierdurch eine Verfahrbewegung des Schaftrohrs gegenüber dem Stützrohr zu ermöglichen, als einfaches, lediglich kraftübertragendes Bauteil ausgestaltet sein und muß nicht mit einem Lagersitz bzw. einer Lageranordnung zur Lagerung des Abtriebsendes der Antriebswelle versehen und somit konstruktiv entsprechend aufwendig gestaltet sein.

Statt dessen ist das Wellenlager in der Rohrwand des Schaftrohrs angeordnet, so daß im einfachsten Fall zur Ausbildung des Wellenlagers eine Bohrung in der Rohrwand des Schaftrohrs ausreichend ist. Da auch die dem Stand der Technik entsprechende Ausbildung des Wellenlagers in der Druckplatte eine Bohrung in der Rohrwand des Schaftrohrs voraussetzt, um das Abtriebsende der Antriebswelle durch die Rohrwand des Schaftrohrs hindurch in die Druckplatte einführen zu können, bedeutet die Ausbildung des Wellenlagers in der Rohrwand nicht nur einen vereinfachten konstruktiven Aufbau der Druckplatte, sondern vielmehr eine Reduzierung des Fertigungsaufwands bzw. eine Vereinfachung der Fertigung der Hubeinrichtung insgesamt.

Wenn gemäß einer vorteilhaften Ausführungsform das aus dem Wellenlager in das Schaftrohr hineinragende Abtriebsende der Antriebswelle in eine Ausnehmung einer mit dem Stützrohr verbundenen und der Hubspindel zusammenwirkenden Spindelmutter hineinragt, ist es möglich, die Spindelmutter im wesentlichen auf oder zumindest dicht benachbart der durch die Achse der Antriebswelle definierten Ebene anzuordnen. Hieraus resultiert eine große relative Überdeckungslänge zwischen dem Stützrohr und dem Schaftrohr im eingefahrenen Zustand des Schaftrohrs, so daß bei einer vorgegebenen Mindestüberdeckungslänge im ausgefahrenen Zustand ein großer Hubweg des Schaftrohrs möglich wird.

Wenn die Ausnehmung in einem Auflagerfortsatz der Spindelmutter ausgebildet ist, der in einem Aufnahmerücksprung am oberen Ende des Stützrohrs aufgenommen ist, läßt sich die Überdeckungslänge zwischen dem Stützrohr und dem Schaftrohr im eingefahrenen Zustand der Hubeinrichtung noch weiter erhöhen.

Eine besonders das Stützrohrende stabilisierende Ausbildung der Spindelmutter ergibt sich, wenn der Auflagerfortsatz derart im Aufnahmerücksprung aufgenommen ist, daß ein Oberrand des Stützfortsatzes bündig mit einem Endquerschnitt des Stützrohrs angeordnet ist.

Eine auch für höhere Drehzahlen der Antriebswelle geeignete Wellenlagerung wird möglich, wenn zur Ausbildung des Wellenlagers eine Lagerhülse in eine in der Rohrwand des Schaftrohrs ausgebildete Lagerbohrung eingesetzt ist.

Für praktische Anwendungen der Hubeinrichtung erweist es sich als besonders vorteilhaft, wenn die Lagerbohrung beidseitig der Mittelachse des Schaftrohrs ausgebildet ist, da so mit einem geringstmöglichen Aufwand eine Anordnung des Hubgetriebes am Schaftrohr sowohl von einer Seite als auch von der gegenüberliegenden Seite her möglich ist.

Nachfolgend werden bevorzugte Ausführungsformen der Erfindung näher erläutert. Es zeigen:
- **Fig. 1**: den oberen Teil einer Hubeinrichtung mit einem am Schaftrohr angeordneten Hubgetriebe in Schnittdarstellung;
- **Fig. 2**: eine in einem Stützrohr der Hubeinrichtung angeordnete Spindelmutter;
- **Fig. 3**: eine Schnittdarstellung des oberen Endes des Überdeckungsbereichs zwischen dem Schaftrohr und dem Stützrohr einer Hubeinrichtung;
- **Fig. 4**: eine gegenüber der in **Fig. 2** dargestellten Spindelmutter variierte Ausführungsform der Spindelmutter.

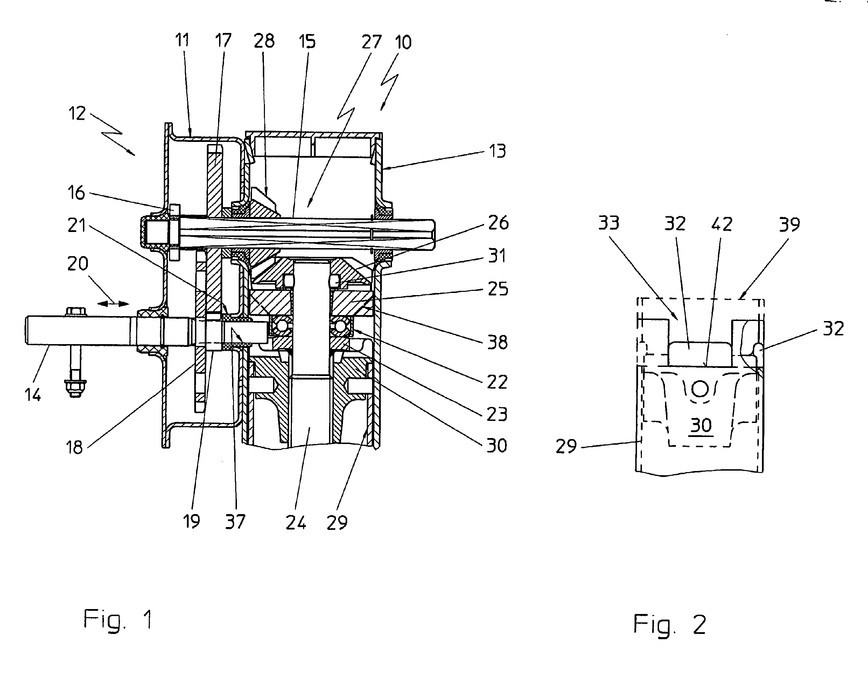

**Fig. 1** zeigt eine Schnittdarstellung einer Hubstütze 10 im Bereich des oberen Endes der Hubstütze mit Darstellung eines in einem Getriebegehäuse 11 untergebrachten Hubgetriebes 12, das von außen an einem Schaftrohr 13 angeordnet ist. Das Hubgetriebe 12 weist eine Antriebswelle 14 und eine Abtriebswelle 15 auf, die über jeweils zwei Stirnräder 16, 17 und 18, 19 verfügen, wobei die Antriebswelle 14 gleichzeitig als Schaltwelle ausgeführt ist und einen Schaltweg 20 ausführen kann, um zwischen zwei Getriebeübersetzungen zur Realisierung eines Schnellgangs und eines Lastgangs differenzieren zu können.

Wie **Fig. 1** deutlich zeigt, ist der Schaltweg 20 der Antriebswelle 14 gerade ausreichend, um den Eingriff einer Zahnradpaarung zu lösen und den Eingriff der zweiten Zahnradpaarung herzustellen. Aufgrund dieses kurzen Schaltweges ist es möglich, das Wellenlager zur Lagerung des in **Fig. 1** rechten Wellenendes der Antriebswelle 14 durch eine Bohrung 37 im Schaftrohr 13 auszubilden, in die eine hier als Kunststoffhülse ausgeführte Lagerhülse 21 eingesetzt ist. Dabei bleibt auf der Ebene der Längsachse der Antriebswelle 14 genügend Raum, um ein Axiallager 22, das zur Kraftübertragung der Spindeldruckkraft von einer Lagerplatte 23 einer Hubspindel 24 in eine Druckplatte 25 des Schaftrohres 13 dient, in der Ebene der Antriebswelle 14 anzuordnen. Die Druckplatte 25 selbst ist oberhalb der Längsachse der Antriebswelle 14 angeordnet und braucht daher auch nicht mit irgendeiner Aufnahmeeinrichtung für das Wellenende der Antriebswelle 14 versehen zu sein. Unmittelbar benachbart und oberhalb der Druckplatte 25 angeordnet befindet sich ein Hubspindelkegelrad 26 als Teil eines innerhalb des Schaftrohres 13 ausgebildeten Umlenkgetriebes 27, dessen Antriebsrad 28 auf der quer verlaufend zur Längsachse der Hubspindel 24 angeordneten Abtriebswelle 15 des Hubgetriebes 12 angeordnet ist.

Wie aus **Fig. 1** zu ersehen ist, ist das Hubspindelkegelrad 26 ohne wesentlichen Nabenbund ausgebildet, so daß eine insgesamt hohe Anordnungsdichte in dem von den Bauelementen Axiallager, Druckplatte und Hubspindelkegelrad benötigten Raum erreicht wird.

Aufgrund der hochgesetzten, sehr dicht an dem Wälzkreis des Hubspindelkegelrads 26 angeordneten Druckplatte 25 ist es möglich, auch eine auf der Hubspindel 24 angeordnete, mit einem Stützrohr 29 drehfest verbundene Spindelmutter 30 im wesentlichen auf einer Höhe mit der Längsachse der Antriebswelle 14 anzuordnen. Hierdurch wird eine besonders große Überdeckung zwischen dem Stützrohr 29 und dem Schaftrohr 13 in dem in **Fig. 1** dargestellten eingefahrenen Zustand der Hubstütze möglich, so daß bei der erfindungsgemäßen Hubstütze ausgehend von einer gegebenen Überdeckungslänge zwischen dem Stützrohr 29 und dem Schaftrohr 13 ein relativ größerer Hub möglich ist als bei konventionellen Hubstützen, ohne daß hierdurch die Knickstabilität der Hubstütze beeinträchtigt wird. Für die Praxis ergibt sich also daraus ein Hubgewinn gegenüber konventionellen Hubstützen, bei denen sich die Spindelmutter weiter unterhalb der Längsachse der Antriebswelle befindet.

Nicht zuletzt wird diese raumsparende und möglichst weit nach oben gesetzte Anordnung der Spindelmutter 30 dadurch möglich, daß eine besonders dicht benachbarte Anordnung zwischen dem Hubspindelkegelrad 26 und der Druckplatte 25 aufgrund eines in eine Nut des Hubspindelkegelrads 26 versenkt angeordneten, hier als Spannstift ausgebildeten Mitnehmers 31 gegeben ist.

Ein weiterer Effekt des wie vorstehend erläutert extrem kurz ausgebildeten Schaltweges 20 der Antriebswelle 14 ist, daß praktisch keine Leerlauf- oder Außereingriffsstellung der Stirnräder 16 bis 19 möglich ist, wodurch eine Ablaufsicherheit bei der erfindungsgemäßen Hubstütze gegeben ist.

**Fig. 2** zeigt eine zu der in **Fig. 1** dargestellten Ausführung variierte

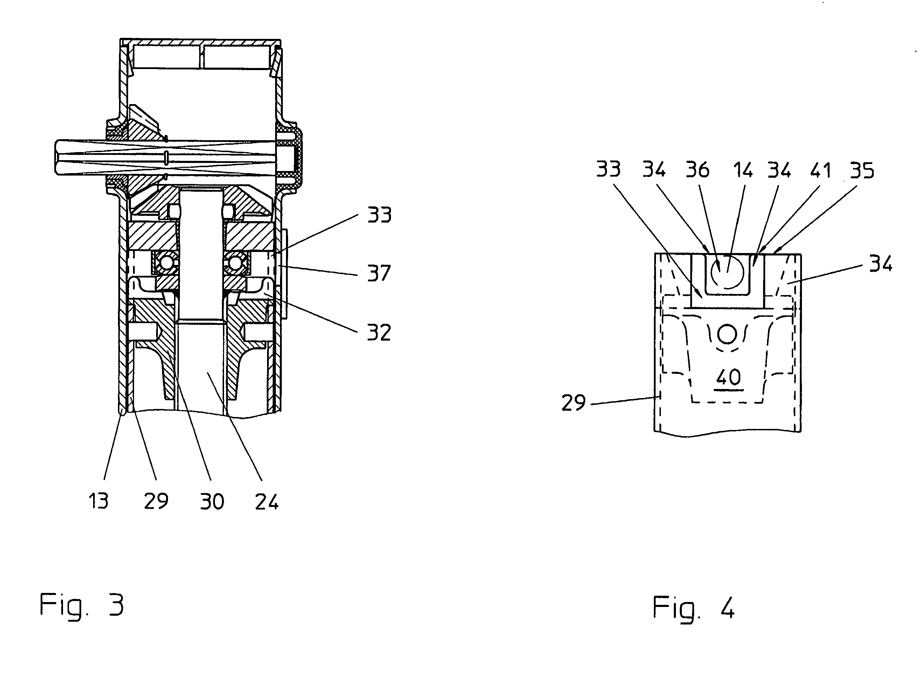

Ausbildung des Stützrohrendes, bei dem die, wie auch **Fig. 3** zeigt, Spindelmutter 30 mit Auflagerfortsätzen 32 in Aufnahmerücksprüngen 33 des Stützrohrendes angeordnet ist, wodurch sich, wie ein Vergleich der **Fig. 1** und **3** deutlich zeigt, eine noch größere Überdeckungslänge zwischen dem Stützrohr 29 und dem Schaftrohr 13 erzielen läßt.

Wie durch den strichpunktierten Linienverlauf in **Fig. 1** angedeutet, ist es auch möglich, durch eine besondere Formgebung der Druckplatte 25, also etwa durch eine hier als Fase 38 ausgebildete Abschrägung des unteren Außenrands der Druckplatte 25 den freien Innenraum des Stützrohrs 29 im Bereich der Spindelmutter 30 zu vergrößern, um gegenüber einem Stützrand 42 (**Fig. 2**) des Stützrohrs 29, der zur Auflage der Auflagerfortsätze 32 dient, einen erhöhten Rohrrand 39 vorsehen zu können, der in den Bereich der Fase 38 der Druckplatte 25 hineinragt, so daß sogar eine überdeckende Anordnung zwischen der Druckplatte 25 und dem Rohrrand 39 des Stützrohrs 29 möglich wird, was zu einer weiteren Erhöhung der Überdeckungslänge zwischen dem Stützrohr 29 und dem Schaftrohr 13 beiträgt. Die gewonnene Überdeckungslänge kann zu einer weiteren Erhöhung des Hubs genutzt werden, so daß das Verhältnis zwischen der Bauhöhe der Hubeinrichtung und der Hublänge noch weiter verbessert werden kann.

**Fig. 4** zeigt eine im Stützrohr 29 angeordnete Spindelmutter 40, die abweichend von der in **Fig. 2** dargestellten Spindelmutter 30 vergleichsweise erhöht ausgebildete Auflagerfortsätze 34 aufweist, die mit ihrem Oberrand 41 in einer Ebene, also bündig mit einem Endquerschnitt 35 des Stützrohrs 29 angeordnet sind. Wie die Auflagerfortsätze 32 der in **Fig. 2** dargestellten Spindelmutter 30 befinden sich die Auflagerfortsätze 34 ebenfalls in hierfür im Umfang bzw. der Rohrwand des Stützrohrs 29 vorgesehenen Aufnahmerücksprüngen 33.

Wie durch den strichpunktiert dargestellten Querschnitt der Antriebswelle 14 in **Fig. 4** verdeutlicht werden soll, befindet sich die Spindelmutter 40 mit der Antriebswelle 14, die mit ihrem Abtriebsende in eine Ausnehmung 36 eines Auflagerfortsatzes 34 hineinragt, im wesentlichen in einer gemeinsamen Ebene. Durch die mit ihrem Oberrand 41 bis zum Endquerschnitt 35 des Stützrohrs 29 hinreichend ausgebildeten Auflagerfortsätze 34 ergibt sich eine bis zum Endquerschnitt 35 reichende Aussteifung des Stützrohrs 29, so daß auch das Rohrende des Stützrohrs 29 noch in der Lage ist, Querkräfte aufzunehmen und so zur Knicksteifigkeit der Hubeinrichtung beizutragen.

Wie weiter ein Vergleich der **Fig. 1** und **3** deutlich macht, ist es möglich, durch eine um 180° um die Längsachse des Schaftrohres 13 relativ zum Stützrohr 29 verdrehte Anordnung bei der Montage die in der Schaftwandung des Schaftrohres 13 angeordnete Bohrung 37 wahlweise links oder rechts der Längsachse der Hubspindel 24 anzuordnen, um bei Bedarf das Hubgetriebe 12 an der im Vergleich zu **Fig. 1** gegenüberliegenden Schaftseite zu montieren. Falls keine Bohrung 37 benötigt wird, wie es bei einer Tandemanordnung von zwei Hubstützen der Fall ist, die über eine Verbindungswelle kraftschlüssig miteinander verbunden sind und von nur einem Hubgetriebe angetrieben werden, kann die Bohrung 37 einfach abgedeckt werden, beispielsweise durch das ohnehin anzubringende Typenschild zur Kennzeichnung der Hubstütze.

## Patentansprüche

1. Hubeinrichtung, insbesondere Sattelstütze oder dergleichen, mit einem Stützrohr (29) und einem gegenüber dem Stützrohr (29) verfahrbaren Schaftrohr (13), wobei am Schaftrohr (13) ein Hubgetriebe (12) angeordnet ist, das eine Antriebswelle (14) zum Anschluß einer Antriebseinrichtung und eine Abtriebswelle (15) zum Antrieb einer im Stützrohr angeordneten Hubspindel (24) aufweist, die auf eine im Schaftrohr (13) angeordnete Druckplatte (25) wirkt,
**dadurch gekennzeichnet,**
**daß** die Antriebswelle (14) des Hubgetriebes (12) mit ihrem Abtriebsende in einem in einer Rohrwand des Schaftrohrs (13) unterhalb der Druckplatte (25) angeordneten Wellenlager (21) gelagert ist.

2. Hubeinrichtung nach Anspruch 1,
**dadurch gekennzeichnet,**
**daß** das zumindest teilweise aus dem Wellenlager (21) in das Schaftrohr (13) hineinragende Abtriebsende der Antriebswelle (14) in eine Ausnehmung (36) einer mit dem Stützrohr (29) verbundenen und mit der Hubspindel (24) zusammenwirkenden Spindelmutter (40) hineinragt.

3. Hubeinrichtung nach Anspruch 2,
**dadurch gekennzeichnet**
**daß** die Ausnehmung (36) in einem Auflagerfortsatz (34) der Spindelmutter (40) ausgebildet ist, der in einem Aufnahmerücksprung (33) am oberen Ende des Stützrohrs (29) aufgenommen ist.

4. Hubeinrichtung nach Anspruch 3,
**dadurch gekennzeichnet,**
**daß** der Auflagerfortsatz (34) derart im Aufnahmerücksprung (33) aufgenommen ist, daß ein Oberrand (41) des Auflagerfortsatzes (34) bündig mit einem Endquerschnitt (35) des Stützrohrs (29) angeordnet ist.

5. Hubeinrichtung nach einem oder mehreren der vorangegangenen Ansprüche,
**dadurch gekennzeichnet,**
**daß** zur Ausbildung des Wellenlagers eine Lagerhülse (21) in eine in der Rohrwand des Schaftrohrs (13) vorgesehene Lagerbohrung (37) eingesetzt ist.

6. Hubeinrichtung nach Anspruch 5,
**dadurch gekennzeichnet,**
**daß** die Lagerbohrung (37) beidseitig der Mittelachse des Schaftrohrs (13) ausgebildet ist.

## Claims

1. Lifting device, in particular trailer support or the like, with a support tube (29) and a shaft tube (13) which may be moved relative to the support tube (29), a lifting gear (12) being arranged on the shaft tube (13) and which comprises a drive shaft (14) for connecting a drive device and an output shaft (15) for driving a lifting spindle (24) arranged in the support tube and which acts on a pressure plate (25) arranged in the shaft tube (13),
**characterised in that**
the drive shaft (14) of the lifting gear (12) is mounted with its output end in a shaft bearing (21) arranged in a tube wall of the shaft tube (13) below the pressure plate (25).

2. Lifting device according to claim 1,
**characterised in that**
the output end of the drive shaft (14) projecting at least partially from the shaft bearing (21) into the shaft tube (13) projects into a recess (36) of a spindle nut (40) attached to the support tube (29) and co-operating with the lifting spindle (24).

3. Lifting device according to claim 2,
**characterised in that**
the recess (36) is configured in a bearing extension (34) of the spindle nut (40), which bearing extension is received in a receiving recess (33) at the upper end of the support tube (29).

4. Lifting device according to claim 3,
**characterised in that**
the bearing extension (34) is received in the receiving recess (33) such that an upper edge (41) of the bearing extension (34) is arranged flush with an end cross section (35) of the support tube (29).

5. Lifting device according to one or more of the preceding claims,
**characterised in that**,
for forming the shaft bearing, a bearing bush (21) is introduced into a bearing bore (37) provided in the tube wall of the shaft tube (13).

6. Lifting device according to claim 5,
**characterised in that**
the bearing bore (37) is configured on both sides of the centre axis of the shaft tube (13).

## Revendications

1. Dispositif de levage, en particulier support de remorque ou similaire, comprenant un tube de support (29) et un tube de tige (13) mobile par rapport au tube de support (29), un engrenage de levage (12) étant disposé sur le tube de tige (13) qui comprend un arbre d'entraînement (14) pour le raccordement d'un dispositif moteur et un arbre de sortie (15) pour entraîner une vis de levage (24) disposée dans le tube de support et agissant sur un plateau de pression (25) disposé dans le tube de tige (13), **caractérisé en ce que** l'extrémité de sortie de l'arbre d'entraînement (14) de l'engrenage de levage (12) est logée dans un palier d'arbre (21) disposé dans une paroi du tube de tige (13) au-dessous du plateau de pression (25).

2. Dispositif de levage selon la revendication 1, **caractérisé en ce que** l'extrémité de sortie de l'arbre d'entraînement (14), qui s'étend au moins partiellement hors du palier d'arbre (21) dans le tube de tige (13), entre dans un évidement (36) d'un écrou (40) relié au tube de support (29) et coopérant avec la vis de levage (24).

3. Dispositif de levage selon la revendication 2, **caractérisé en ce que** l'évidement (36) est formé dans un prolongement de support (34) de l'écrou (40), prolongement qui est reçu dans un retrait de logement (33) situé sur la partie supérieure du tube de support (29).

4. Dispositif de levage selon la revendication 3, **caractérisé en ce que** le prolongement de support (34) est reçu dans le retrait de logement (33) de telle sorte qu'un rebord supérieur (41) du prolongement de support (34) est à niveau avec une section d'extrémité (35) du tube de support (29).

5. Dispositif de levage selon l'une ou plusieurs des revendications précédentes, **caractérisé en ce qu'**un manchon de palier (21) est inséré dans un alésage de palier (37) prévu dans la paroi de tube de tige (13).

6. Dispositif de levage selon la revendication 5, **caractérisé en ce que** l'alésage de palier (37) est formé des deux côtés de l'axe central du tube de tige (13).
